# FASCICULE DE BREVET EUROPEEN

(11) **EP 0 595 861 B1**
(45) Date de publication et mention de la délivrance du brevet: **11.03.1998**
(21) Numéro de dépôt: 92914990.4
(22) Date de dépôt: 09.07.1992
(51) Int. Cl.: C01D 3/14, C01D 3/16, B01D 53/34

(54) **PROCEDE DE FABRICATION D'UNE SOLUTION AQUEUSE DE CHLORURE DE SODIUM**
VERFAHREN ZUR HERSTELLUNG EINER WASSRIGEN LOSUNG VON NATRIUMCHLORID
METHOD FOR PRODUCING AN AQUEOUS SODIUM CHLORIDE SOLUTION

(30) Priorité: 19.07.1991 FR 9109266
(43) Date de publication de la demande: 11.05.1994
(73) Titulaire: SOLVAY (Société Anonyme), B-1050 Bruxelles (BE)
(72) Inventeur: NINANE, Léon, F-54110 Dombasle-sur-Meurthe (FR); ADAM, Jean-François, F-54110 Dombasle-sur-Meurthe (FR)
(74) Mandataire: Anthoine, Paul
(86) Numéro de dépôt international: EP9201478
(87) Numéro de publication internationale: WO9302014

(56) Documents cités:
- EP-A- 0 087 934
- JP-B- 6 038 197
- PATENT ABSTRACTS OF JAPAN vol. 004, no. 159 (C-030)6 Novembre 1980
- IAN F. WHITE, T.F. O'BRIEN 'Secondary brine treatment: ion-exchangepurification of brine ' April 1991
- Central Patents Index, Basic Abstracts Journal Week 8039, Derwent Publications Ltd, London, GB; AN 80-68494C/39

## Description

L'invention concerne un procédé pour la fabrication de solutions aqueuses de chlorure de sodium utilisables dans des procédés industriels.

Les solutions aqueuses de chlorure de sodium trouvent des applications importantes dans l'industrie. C'est le cas en particulier dans l'industrie de la fabrication du carbonate de sodium par le procédé de la soude à l'ammoniaque, ainsi que dans les procédés de fabrication électrolytique du chlore et de solutions aqueuses d'hydroxyde de sodium.

Ces procédés industriels requièrent en général des solutions aqueuses de chlorure de sodium de grande pureté, notamment en métaux polyvalents tels que le calcium, le magnésium, l'aluminium, le fer, le plomb et le zinc, par exemple. Cette exigence est particulièrement stricte dans le cas des procédés d'électrolyse mettant en oeuvre des membranes sélectivement perméables aux cations, telles que des membranes en polymère perfluorés comprenant des groupes fonctionnels dérivés d'acide carboxylique (GB-A-1375126). Dans ces procédés d'électrolyse on préconise généralement des solutions de chlorure de sodium dont la teneur en cations polyvalents, notamment en cations calcium, n'excède pas 0,1 ppm (GB-A-2005723).

Les solutions aqueuses destinées aux cellules d'électrolyse sont généralement obtenues par dissolution de sel gemme dans de l'eau (Chlorine, Its manufacture, Properties and Uses - J. S. Sconce - Reinhold Publishing Corporation, New York - 1962 - pages 119 et 123). Les saumures brutes obtenues par dissolution de sel gemme dans de l'eau ont toutefois, en général, une teneur trop élevée en cations polyvalents pour permettre leur utilisation dans les procédés d'électrolyse. A cet effet, on a proposé de les traiter sur des résines chélatantes du type Na, dans le but d'en extraire les cations polyvalents. (The American Institute of Chemical Engineers, N° 219, Vol. 78, 1982, pages 46-53 : J.J. Wolff and R.E. Anderson, Ion-exchange purification of feed brine for chlor-alkali electrolysis cells; the role of Duolite ES-467).

Dans le document JP-B 60-38197, on décrit un procédé pour la récupération de métaux lourds présents dans des eaux résiduaires du lavage de fumées. Selon ce procédé, les eaux résiduaires sont alcalinisées pour précipiter les métaux lourds qui sont ensuite séparés par décantation et filtration et la solution aqueuse recueillie de la filtration est traitée successivement sur une résine chélatante comprenant des ligands soufre pour récupérer le mercure, et sur une résine chélatante à ligands azote pour récupérer le calcium et les autres métaux lourds. La solution aqueuse recueillie à l'issue de ce procédé connu contient une teneur élevée en chlorure de sodium et sa teneur en métaux lourds est suffisamment faible pour qu'elle puisse être rejetée dans un cours d'eau. Dans le procédé connu qui vient d'être décrit, la résine chélatante à ligands azote peut être du type Na, du type Ca ou du type H; les résines de type H sont toutefois préférées car leur régénération au moyen d'une solution aqueuse d'acide chlorhydrique ou sulfurique est aisée. Les solutions aqueuses de chlorure de sodium recueillies à l'issue du procédé utilisant des résines du type H contiennent toutefois une teneur trop élevée en calcium pour permettre leur utilisation dans des procédés industriels tels que l'électrolyse par exemple.

L'invention remédie à cet inconvénient, en fournissant un procédé qui permet de valoriser industriellement des solutions aqueuses de chlorure de sodium, résiduaires du lavage de fumées.

En conséquence, l'invention concerne un procédé de fabrication d'une solution aqueuse industrielle de chlorure de sodium, dans lequel on traite une solution aqueuse de chlorure de sodium contenant des métaux de valence supérieure à 1 sur une résine chélatante du type Na, le procédé se caractérisant en ce que, pour obtenir la solution aqueuse de chlorure de sodium contenant des métaux de valence supérieure à 1, on soumet des fumées contenant du chlorure d'hydrogène, du dioxyde de soufre et des métaux de valence supérieure à 1 et provenant de l'oxydation de produits chlorés, à un lavage avec de l'eau de pH réglé pour recueillir du lavage une solution aqueuse d'acide chlorhydrique de pH inférieur à 6,5 et on recueille et alcalinise la ladite solution d'acide chlorhydrique en y dissolvant de l'hydroxyde de sodium pour précipiter les métaux de valence supérieure à 1 à l'état d'hydroxydes que l'on sépare.

Dans le procédé selon l'invention, on entend désigner par solution aqueuse industrielle de chlorure de sodium, une solution aqueuse de chlorure de sodium qui est destinée à intervenir dans l'activité technique d'une industrie.

Dans le procédé selon l'invention, on met en oeuvre une solution aqueuse qui est recueillie du lavage de fumées provenant de l'oxydation de produits chlorés. Ceux-ci peuvent généralement comprendre des hydrocarbures chlorés et des polymères chlorés, par exemple, du chlorobenzène, du chloroforme, du polychlorure de vinyle ou du polychlorure de vinylidène. Ces fumées contiennent dès lors du chlorure d'hydrogène. Elles contiennent en outre des métaux polyvalents. Ceux-ci peuvent provenir de diverses sources (stabilisants de matériaux polymériques, impuretés métalliques des produits chlorés soumis à l'oxydation ou mélangées à ceux-ci, impuretés métalliques du combustible éventuellement utilisé). Le calcium, le magnésium, l'aluminium, le chrome, le fer, le molybdène, le plomb, le strontium et le zinc sont des métaux polyvalents habituellement présents dans les fumées.

Le lavage des fumées est effectué au moyen d'eau acidifiée. On utilise de l'eau acidifiée dont le pH est inférieur à 7. La quantité d'eau de lavage et son pH doivent être réglés de manière à dissoudre le chlorure d'hydrogène et les métaux polyvalents présents dans les fumées traitées. On recueille, du lavage des fumées, une solution aqueuse d'acide chlorhydrique contenant les métaux polyvalents dissous. Le pH de l'eau du lavage doit être choisi de manière à éviter une dissolution du dioxyde de carbone et des oxydes de soufre qui sont présents dans les fumées traitées. En pratique, on règle la quantité d'eau de lavage et son pH, de manière que le pH de la solution d'acide chlorhydrique recueillie du lavage soit inférieur à 6,5, de préférence à 5, les valeurs situées entre 2 et 4 étant spécialement avantageuses.

Les fumées contenant des oxydes de soufre, il est avantageux que le lavage acide soit suivi d'un lavage alcalin, par exemple au moyen d'une solution aqueuse d'hydroxyde de sodium ou de (bi)carbonate de sodium.

La solution aqueuse d'acide chlorhydrique recueillie du lavage des fumées est ensuite alcalinisée pour précipiter les métaux polyvalents qu'elle contient, à l'état d'hydroxydes. La suspension aqueuse ainsi obtenue est ensuite soumise à une séparation mécanique pour en séparer le précipité d'hydroxydes de métaux polyvalents. L'eau mère recueillie de la séparation contient encore des métaux polyvalents dissous. Elle constitue la solution aqueuse de chlorure de sodium que l'on traite sur une résine chélatante.

L'eau mère recueillie de la précipitation des métaux polyvalents présente un pH alcalin et peut être traitée telle quelle sur la résine chélatante. Il est avantageux de régler son pH entre 8 et 11. Il est par ailleurs avantageux de la soumettre à une évaporation pour la concentrer, avant de la traiter sur la résine chélatante.

Les résines chélatantes utilisables dans le procédé selon l'invention sont bien connues en technique. Elles comprennent un squelette polymérique sur lequel sont greffés des groupes fonctionnels complexants comprenant des cations interchangeables. Des exemples de polymères utilisables pour le squelette polymérique comprennent les polyoléfines (par exemple le polyéthylène), les polymères dérivés du styrène (par exemple des copolymères dérivés du styrène et du divinylbenzène) et les résines acryliques. On entend désigner par résine chélatante du type Na, une résine dans laquelle les cations interchangeables sont des cations sodium. L'utilisation, conformément à l'invention, d'une résine chélatante du type Na assure une extraction efficace des cations des métaux polyvalents de l'eau mère (notamment des ions calcium) selon le processus décrit dans le document "The American Institute of Chemical Engineers, N° 219, Vol. 78, 1982, pages 46-53 : J.J. Wolff and R.E. Anderson, Ion-exchange purification of feed brine for chlor-alkali electrolysis cells; the role of Duolite ES-467". A l'issue du procédé, la résine doit être régénérée, ce qui peut être réalisé de manière connue en soi en la traitant successivement avec une solution aqueuse d'acide chlorhydrique et avec une solution aqueuse d'hydroxyde de sodium. La résine se présente généralement à l'état de granules, au contact desquels on fait circuler l'eau mère.

On utilise avantageusement, selon une forme de réalisation particulière de l'invention, une résine chélatante dans laquelle les groupes fonctionnels comprennent un ligand de l'azote. Ceux-ci peuvent par exemple comprendre des composés dérivés des amines ou des imines. Des résines chélatantes spécialement recommandées sont celles comprenant des groupes fonctionnels dérivés d'acides organiques, celles comprenant des groupes fonctionnels dérivés d'acide iminodiacétique ou d'acide aminophosphonique étant préférées. De tels résines sont notamment décrites dans le brevet US-A-4002564 (DIAMOND SHAMROCK CORP.) et dans la demande de brevet EP-A-0087934 (DUOLITE INTERNATIONAL S.A.). Des exemples de résines utilisables dans le procédé selon l'invention sont celles commercialisées sous les marques DUOLITE (ROHM & HAAS COMPANY) et LEWATIT (BAYER AG). Dans le cas particulier où la solution aqueuse recueillie du lavage des fumées contient du mercure il est avantageux de faire précéder le traitement sur la résine contenant des ligands azote par un traitement sur une résine chélatante contenant des ligands soufre, comme décrit dans le document JP-B 60-38197.

Dans une forme d'exécution particulière du procédé selon l'invention on additionne du chlorure de calcium à l'eau mère précitée recueillie après séparation du précipité d'hydroxydes des métaux polyvalents, et on sépare le sulfate de calcium qui précipite, avant de traiter l'eau mère sur la résine chélatante. Dans cette forme d'exécution de l'invention, le sulfate de calcium qui précipite est peu contaminé. Il peut de ce fait être facilement valorisé industriellement ou rejeté tel quel en décharge. Le cas échéant, il ne nécessite pas de décharge spécialisée, ce qui constitue un avantage économique.

Selon une autre forme de réalisation, on additionne à cette solution une quantité suffisante d'hydroxyde de calcium (par exemple sous la forme d'un lait de chaux) pour coprécipiter les hydroxydes métalliques et du sulfate de calcium.

Les solutions aqueuses recueillies à l'issue du procédé selon l'invention peuvent être utilisées telles quelles ou être Soumises à une évaporation pour les concentrer ou les saturer en chlorure de sodium.

Le procédé selon l'invention permet d'obtenir des solutions aqueuses industrielles de chlorure de sodium de très grande pureté, dont la teneur en ions calcium est inférieure à 1 ppm. Il permet notamment d'obtenir des solutions aqueuses de chlorure de sodium qui, après avoir été saturées en chlorure de sodium par évaporation partielle, présentent une teneur pondérale en calcium inférieure à 0,1 ppm et n'excédant généralement pas 0,05 ppm.

Les solutions aqueuses de chlorure de sodium obtenues au moyen du procédé selon l'invention trouvent dès lors diverses applications dans l'industrie. Elles peuvent notamment servir de matière première pour la fabrication de carbonate de sodium par le procédé de la soude à l'ammoniaque (Manufacture of Soda - Te-Pang Hou - Hafner Publishing Company - 1969), pour la fabrication électrolytique de chlore et de solutions aqueuses d'hydroxyde de sodium, pour la fabrication électrolytique de solutions aqueuses de chlorate de sodium, ainsi que pour la fabrication de sel solide.

L'invention est tout spécialement adaptée au traitement de fumées provenant des installations de calcination des ordures ménagères ou municipales.

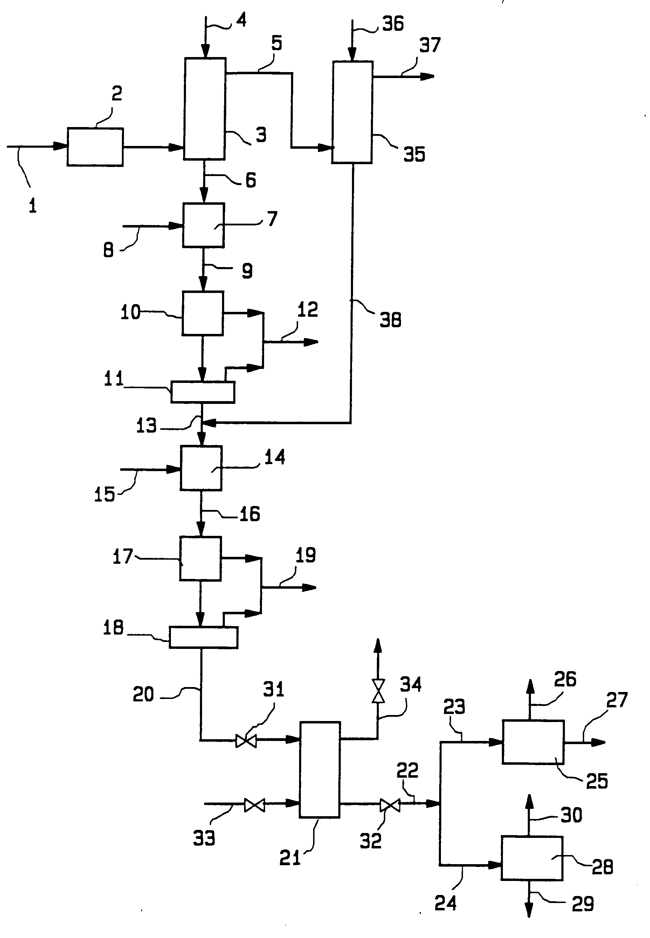

Des particularités et détails de l'invention vont apparaître au cours de la description qui va suivre, en référence à la figure unique du dessin annexé qui représente le schéma d'une installation mettant en oeuvre une forme de réalisation particulière de chacun des procédés selon l'invention.

L'installation représentée au dessin est conçue pour épurer des fumées provenant de la calcination d'ordures ménagères ou municipales et pour valoriser les effluents recueillis de l'épuration de ces fumées. Les ordures ménagères traitées contiennent notamment des résidus chlorés. Ces résidus chlorés comprennent des produits polymériques, par exemple des détritus provenant d'emballages en polychlorure de vinyle, de matériaux de construction en polychlorure de vinyle ou de films en copolymère de vinylidène. La calcination des ordures ménagères ou municipales provoque une oxydation de ces polymères chlorés, de sorte que les fumées recueillies de la calcination contiennent du chlorure d'hydrogène. Elles contiennent en outre du dioxyde de soufre, provenant de la combustion de déchets soufrés ou du combustible utilisé, ainsi que des métaux polyvalents (aluminium, calcium, magnésium, chrome, fer, molybdène, plomb, strontium et zinc, par exemple). Ces fumées sont désignées par la notation de référence 1 sur le dessin annexé.

Dans l'installation, les fumées 1 traversent d'abord un dispositif de dépoussièrage 2. Celui-ci comprend généralement une batterie d'électrofiltres. Les fumées recueillies du dispositif de dépoussiérage 2 sont envoyées dans un scrubber de lavage 3, où elles sont mises à circuler à contre-courant d'eau de lavage 4. On utilise de l'eau de lavage à pH acide. Le débit de l'eau de lavage et son pH sont réglés de manière que sensiblement la totalité du chlorure d'hydrogène et des métaux polyvalents de la fumée passent en solution. On recueille du scrubber 3, d'une part des fumées 5 pratiquement exemptes de chlorure d'hydrogène et, d'autre part, une solution aqueuse 6 contenant de l'acide chlorhydrique et des ions sulfate et des ions des métaux polyvalents.

Dans une chambre de réaction 7, on traite la solution aqueuse 6 avec une quantité réglée d'une solution aqueuse d'hydroxyde de sodium 8, de manière à y réaliser une valeur de pH comprise entre 9 et 11 et précipiter les métaux polyvalents à l'état d'hydroxydes. On soutire dès lors de la chambre de réaction 7, une suspension aqueuse 9 d'hydroxydes métalliques dispersés dans une solution aqueuse de chlorure de sodium et de sulfate de sodium. La suspension aqueuse 9 est traitée successivement dans une chambre de décantation 10 et sur un filtre 11, où l'on en extrait les matières insolubles que l'on évacue 12. L'eau mère 13 recueillie du filtre 11 est envoyée dans une chambre de réaction 14 où on lui additionne une quantité suffisante d'une solution aqueuse de chlorure de calcium 15, pour précipiter les ions sulfate à l'état de sulfate de calcium. La suspension aqueuse résultante 16 est traitée successivement dans une chambre de décantation 17 et sur un filtre 18, où l'on en extrait le précipité de sulfate de calcium que l'on évacue 19. Le précipité de sulfate de calcium 19 ne contient qu'une très faible quantité de métaux polyvalents et peut dès lors être envoyé tel quel dans une décharge de stockage de résidus.

La solution aqueuse de chlorure de sodium 20 recueillie du filtre 18 contient des métaux polyvalents dissous, en une quantité généralement trop élevée pour permettre son utilisation dans un procédé industriel. Selon l'invention, on la fait circuler dans une colonne 21 au contact d'une résine chélatante comprenant des groupes fonctionnels du type Na, dérivés d'acide aminophosphonique. Dans la colonne 21 s'opère dès lors un échange ionique entre les cations sodium de la résine et les cations polyvalents de la solution aqueuse 20. On recueille de la colonne 21 une solution aqueuse industrielle de chlorure de sodium 22, de pureté suffisante pour qu'elle puisse être utilisée telle quelle dans un procédé industriel. A titre d'exemple, dans l'installation représentée au dessin, la solution aqueuse 22 est répartie en deux fractions 23 et 24.

La fraction 23 est envoyée, conformément à l'invention, dans une cellule d'électrolyse 25 équipée de membranes sélectivement perméables aux cations. Dans la cellule d'électrolyse 25, la solution 23 subit de manière connue en soi une électrolyse conduisant à la production de chlore 26 et d'une solution aqueuse d'hydroxyde de sodium 27.

La fraction 24 est envoyée dans un évaporateur 28 duquel on recueille du chlorure de sodium cristallisé 29 et de la vapeur d'eau 30. Le chlorure de sodium solide 29 trouve diverses applications industrielles.

La résine chélatante de la colonne 21 doit être régénérée périodiquement. A cet effet, on isole la colonne 21 des conduits 20 et 22 au moyen de vannes d'isolation 31 et 32, on opère ensuite en deux étapes successives, comme décrit dans le document "The American Institute of Chemical Engineers, N° 219, Vol. 78, 1982, pages 46-53 : J.J. Wolff and R.E. Anderson, Ion-exchange purification of feed brine for chlor-alkali electrolysis cells; the role of Duolite ES-467". Dans une première étape, on introduit dans la colonne 21, via le conduit 33, une solution aqueuse d'acide chlorhydrique, pour substituer des protons sur les sites actifs de la résine chélatante et on recueille via le conduit 34 une solution aqueuse diluée d'acide chlorhydrique contenant les métaux polyvalents. Dans la seconde étape, on introduit par le conduit 33 une solution aqueuse d'hydroxyde de sodium, pour substituer des cations sodium au protons des sites actifs de la résine et on recueille une solution aqueuse diluée d'hydroxyde de sodium par le conduit 34.

Les fumées 4 recueillies du scrubber 3 contiennent parfois une teneur excessive en oxydes de soufre. Le cas échéant, on les envoie dans un réacteur 35 où on les traite avec une solution de bicarbonate de sodium 36. On recueille du réacteur 35, d'une part des fumées 37 pratiquement exemptes d'oxydes de soufre et, d'autre part, une solution aqueuse de sulfate de sodium 38, que l'on réunit à la solution 13, en amont de la chambre de réaction 14.

Dans une variante du procédé, la solution diluée d'hydroxyde de sodium recueillie du conduit 34 lors de la seconde étape de régénération de la résine est recyclée dans la chambre 7, après avoir éventuellement été concentrée.

Dans une autre variante, qui est préférée, du procédé, la solution diluée d'acide chlorhydrique et la solution diluée d'hydroxyde de sodium qui sont recueillies respectivement de la première étape et de la seconde étape de régénération de la résine sont réunies en proportions adéquates pour former une solution aqueuse de chlorure de sodium (contenant les métaux polyvalents), et celle-ci est recyclée dans la chambre de réaction 7.

L'exemple suivant sert à illustrer l'invention.

Des fumées provenant d'une installation de calcination d'ordures ménagères ont été filtrées, puis lavées par atomisation d'eau dans les fumées et on a recueilli une solution acide. Celle-ci a été alcalinisée par addition d'hydroxyde de sodium, pour y réaliser une valeur de pH égale à 10, et la suspension aqueuse qui en est résulté a été soumise à une décantation, puis à une filtration pour éliminer les matières insolubles. On a prélevé deux échantillons de l'eau mère recueillie du filtre.

Un premier échantillon a été soumis à une évaporation et on a recueilli un précipité de chlorure de sodium contenant des impuretés métalliques.

Le second échantillon, à pH égal à 10, a été traité conformément à l'invention, sur une résine chélatante du type sodique LEWATIT (marque déposée de BAYER).

Dans le tableau suivant, on a mentionné
. la composition de l'eau mère telle quelle [colonne (1)],
. la composition du précipité de chlorure de sodium recueilli de l'évaporation du premier échantillon d'eau mère [colonne (2)],
. la composition du second échantillon d'eau mère, recueilli en aval de la résine chélatante [colonne (3)].

| | (1) Eau mère (t. q.) (mg/kg) | (2) Précipité mg/kg) | (3) Eau mère (en aval de la résine) (mg/kg) |
|---|---|---|---|
| Al | 0,65 | 0,48 | < 0,03 |
| Ba | 0,06 | 0,77 | 0,01 |
| Ca | 18,9 | 185 | 0,41 |
| Cd | 0,04 | 1,2 | < 0,03 |
| Cr | 0,2 | 0,2 | < 0,03 |
| Fe | 0,14 | 1,3 | < 0,05 |
| Mg | 4,1 | 6,4 | 0,13 |
| Mo | 0,52 | 0,8 | 0,47 |
| Pb | 1,8 | 10,3 | < 0,2 |
| Sr | 0,24 | 1,47 | 0,006 |
| Ti | 0,06 | 0,4 | 0,02 |
| Zn | 0,34 | 0,16 | < 0,01 |

## Revendications

1. Procédé de fabrication d'une solution aqueuse industrielle de chlorure de sodium, dans lequel on traite une solution aqueuse de chlorure de sodium contenant des métaux de valence supérieure à 1 sur une résine chélatante du type Na, caractérisé en ce que, pour obtenir la solution aqueuse de chlorure de sodium contenant des métaux de valence supérieure à 1, on soumet des fumées contenant du chlorure d'hydrogène, du dioxyde de soufre et des métaux de valence supérieure à 1 et provenant de l'oxydation de produits chlorés, à un lavage avec de l'eau de pH réglé pour recueillir du lavage une solution aqueuse d'acide chlorhydrique de pH inférieur à 6,5, et on recueille et alcalinise ladite solution d'acide chlorhydrique en y dissolvant de l'hydroxyde de sodium pour précipiter les métaux de valence supérieure à 1 à l'état d'hydroxydes que l'on sépare.

2. Procédé selon la revendication 1, caractérisé en ce que la solution aqueuse d'acide chlorhydrique recueillie du lavage présente un pH compris entre 2 et 4.

3. Procédé selon la revendication 1 ou 2, caractérisé en ce qu'on alcalinise la solution aqueuse d'acide chlorhydrique à une valeur de pH comprise entre 8 et 11, en y dissolvant de l'hydroxyde de sodium.

4. Procédé selon l'une quelconque des revendications 1 à 3, caractérisé en ce qu'on additionne du chlorure de calcium à l'eau mère que l'on a recueillie de la séparation du précipité d'hydroxydes des métaux de valence supérieure à 1, pour précipiter les ions SO₄²⁻ qu'elle contient et on sépare le précipité de sulfate de calcium résultant.

5. Procédé selon l'une quelconque des revendications 1 à 4, caractérisé en ce qu'on met en oeuvre une résine chélatante comprenant des ligands azote.

6. Procédé selon la revendication 5, caractérisé en ce qu'on met en oeuvre une résine chélatante comprenant des groupes fonctionnels dérivés d'acide iminodiacétique.

7. Procédé selon l'une quelconque des revendications 1 à 6, caractérisé en ce qu'on met en oeuvre une résine comprenant des groupes fonctionnels dérivés d'acide aminophosphonique.

8. Procédé selon l'une quelconque des revendications 1 à 7, caractérisé en ce qu'on régénère la résine chélatante en la traitant successivement avec une solution aqueuse d'acide chlorhydrique et une solution aqueuse d'hydroxyde de sodium.

## Claims

1. Process for the manufacture of an industrial aqueous sodium chloride solution, in which an aqueous sodium chloride solution containing metals with a valency greater than 1 is treated on a chelating resin of the Na type, characterized in that, in order to obtain the aqueous sodium chloride solution containing metals with a valency greater than 1, fumes containing hydrogen chloride, sulphur dioxide and metals with a valency greater than 1 and originating from the oxidation of chlorinated products are scrubbed with water with a pH adjusted in order to collect, from the scrubbing, an aqueous hydrochloric acid solution with a pH of less than 6.5 and the said hydrochloric acid solution is collected and basified, by dissolving sodium hydroxide therein, in order to precipitate the metals with a valency greater than 1 in the form of hydroxides which are separated off.

2. Process according to Claim 1, characterized in that the aqueous hydrochloric acid solution collected from the scrubbing exhibits a pH of between 2 and 4.

3. Process according to Claim 1 or 2, characterized in that the aqueous hydrochloric acid solution is basified to a pH value of between 8 and 11 by dissolving sodium hydroxide therein.

4. Process according to any one of Claims 1 to 3, characterized in that calcium chloride is added to the aqueous mother liquor which has been collected from the separation of the precipitate of hydroxides of the metals with a valency greater than 1, in order to precipitate the SO₄²⁻ ions which it contains, and the resulting calcium sulphate precipitate is separated off.

5. Process according to any one of Claims 1 to 4, characterized in that use is made of a chelating resin comprising nitrogen ligands.

6. Process according to Claim 5, characterized in that use is made of a chelating resin comprising functional groups derived from iminodiacetic acid.

7. Process according to any one of Claims 1 to 6, characterized in that use is made of a resin comprising functional groups derived from aminophosphonic acid.

8. Process according to any one of Claims 1 to 7, characterized in that the chelating resin is regenerated by successively treating it with an aqueous hydrochloric acid solution and an aqueous sodium hydroxide solution.

## Patentansprüche

1. Verfahren zur Herstellung einer industriellen wäßrigen Natriumchloridlösung, bei dem man eine wäßrige Natriumchloridlösung, die Metalle mit einer Wertigkeit größer 1 enthält, über einem chelatbildenden Harz vom Na-Typ behandelt, dadurch gekennzeichnet, daß man, um die wäßrige Natriumchloridlösung, die Metalle mit einer Wertigkeit größer 1 enthält, zu erhalten, Rauchgase, die Chlorwasserstoff, Schwefeldioxid und Metalle mit einer Wertigkeit größer 1 enthalten und aus der Oxidation chlorierter Produkte stammen, einer Wäsche mit Wasser mit eingestelltem pH-Wert unterzieht, um aus der Wäsche eine wäßrige Salzsäurelösung mit einem pH-Wert kleiner 6,5 zu gewinnen, und man besagte Salzsäurelösung gewinnt und alkalisch macht, indem man Natriumhydroxid darin auflöst, um die Metalle mit einer Wertigkeit größer 1 als Hydroxide auszufällen, welche man abtrennt.

2. Verfahren gemäß Anspruch 1, dadurch gekennzeichnet, daß die wäßrige Salzsäurelösung, die aus der Wäsche gewonnen wurde, einen pH-Wert zwischen 2 und 4 aufweist.

3. Verfahren gemäß Anspruch 1 oder 2, dadurch gekennzeichnet, daß man die wäßrige Salzsäurelösung auf einen pH-Wert zwischen 8 und 11 alkalisch macht, indem man Natriumhydroxid darin auflöst.

4. Verfahren gemäß einem der Ansprüche 1 bis 3, dadurch gekennzeichnet, daß man der Mutterlauge, die man bei der Abtrennung des Niederschlags von Hydroxide der Metallen mit einer Wertigkeit größer 1 gewonnen hat, Calciumchlorid hinzufügt, um die SO₄²⁻-Ionen, die sie enthält, auszufällen, und man den resultierenden Calciumsulfat-Niederschlag abtrennt.

5. Verfahren gemäß einem der Ansprüche 1 bis 4, dadurch gekennzeichnet, daß man ein chelatbildendes Harz verwendet, das Stickstoffliganden umfaßt.

6. Verfahren gemäß Anspruch 5, dadurch gekennzeichnet, daß man ein chelatbildendes Harz verwendet, das funktionelle Gruppen umfaßt, die von Iminodiessigsäure abgeleitet sind.

7. Verfahren gemäß einem der Ansprüche 1 bis 6, dadurch gekennzeichnet, daß man ein Harz verwendet, das funktionelle Gruppen umfaßt, die von Aminophosphonsäure abgeleitet sind.

8. Verfahren gemäß einem der Ansprüche 1 bis 7, dadurch gekennzeichnet, daß man das chelatbildende Harz regeneriert, indem man es nacheinander mit einer wäßrigen Salzsäurelösung und einer wäßrigen Natriumhydroxidlösung behandelt.
